# EUROPÄISCHE PATENTSCHRIFT

(11) **EP 2 828 320 B1**
(45) Veröffentlichungstag und Bekanntmachung des Hinweises auf die Patenterteilung: **09.03.2016**
(21) Anmeldenummer: 13709243.3
(22) Anmeldetag: 15.03.2013
(51) Int. Cl.: C03C 25/12, C03C 25/32, C08G 18/58, C08J 5/24, C08G 18/42, C08G 18/76

(54) **LAGERSTABILE POLYURETHAN-PREPREGS UND DARAUS HERGESTELLTE FASERVERBUNDBAUTEILE**
POLYURETHANE PREPREGS STABLE IN STORAGE AND FIBRE COMPOUND COMPONENTS MADE OF SAME
PRÉ-IMPRÉGNÉ EN POLYURÉTHANE STABLE AU STOCKAGE ET COMPOSANTS DE FIBRES COMPOSITES AINSI FABRIQUÉS À PARTIR DE CE PRÉ-IMPRÉGNÉ

(30) Priorität: 20.03.2012 EP 12160307; 19.10.2012 EP 12189155
(43) Veröffentlichungstag der Anmeldung: 28.01.2015
(73) Patentinhaber: Covestro Deutschland AG, 51373 Leverkusen (DE)
(72) Erfinder: HUPKA, Florian, 40591 Düsseldorf (DE); SCHORNSTEIN, Marcel, 41462 Neuss (DE); WEGENER, Dirk, 40789 Monheim (DE); RASSELNBERG, Harald, 41541 Dormagen (DE)
(74) Vertreter: Levpat
(86) Internationale Anmeldenummer: PCT/EP2013/055413
(87) Internationale Veröffentlichungsnummer: WO 2013/139704

(56) Entgegenhaltungen:
- WO-A1-03/082944
- WO-A1-2008/138855
- WO-A1-2012/022683
- DE-A1-102010 029 355
- US-A1- 2009 171 060

## Beschreibung

Die vorliegende Erfindung betrifft lagerstabile Prepregs (preimpregnated fibers; vorimprägnierte Fasern) auf Basis niedrigviskoser Polyurethansysteme mit sehr hoher Kennzahl und daraus hergestellte Faserverbundbauteile (Composite-Bauteile, Formkörper), die durch Imprägnierverfahren von faserverstärkten Materialien wie Geweben und Gelegen erhältlich sind, sowie ein Verfahren zu deren Herstellung.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen Nasslaminiertechnologie ("wet-lay-up"-Technologie) eingesetzt.

Industrielle Anwender solcher Systeme verlangen neben einem guten Handling, längere Lagerstabilitäten bei Raumtemperatur aber auch schnellere Zykluszeiten sowie niedrige und energieeffizientere Aushärtetemperaturen der Prepregs.

Eine Voraussetzung dafür sind Matrixkomponenten, die die Herstellung lagerfähiger, für die Weiterverarbeitung hinreichend eigenschaftsstabiler Prepregs gestatten. Dazu ist es erforderlich, dass die Prepregs nicht klebend sein dürfen, sie dürfen aber auch nicht vollständig ausgehärtet sein, vielmehr darf die Harzmatrix lediglich vorpolymerisiert sein, d.h. sie muss noch schmelzbar sein. Anforderungen an die vernetzte Harzmatrix bestehen in einer hohen Grenzflächenhaftung zu den Verstärkungsmaterialien und Einlagerungskomponenten und gegebenenfalls auch zu anderen Materialien, beispielsweise metallischen oder keramischen Materialien. Im vernetzten Zustand sind ferner hohe chemische Stabilität und Wärmeformbeständigkeit gefordert.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und ihrer Festigkeit beispielsweise zur Herstellung von Composite-Materialien über SRIM (structural reaction injection moulding)- oder Pultrusionsverfahren eingesetzt werden. Polyurethan-Composite weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composite-Bauteile auf der Basis von Epoxy-Systemen werden zum Beispiel in WO98/50211 beschrieben.

In WO2006/043019 wird ein Verfahren zur Herstellung von Prepregs auf der Basis von Epoxidharz-Polyurethanpulvern beschrieben.

In DE-A 102010029355 wird ein Verfahren zur Herstellung von lagerstabilen Polyurethan-Prepregs und daraus hergestellte Formkörper beschrieben, die durch ein Direkt-Schmelze-Imprägnierverfahren von faserverstärkten Materialien unter Verwendung von reaktiven Polyurethanzusammensetzungen erhältlich sind. Die hierbei verwendeten, im Wesentlichen aliphatischen Polyisocyanate sind entweder intern blockiert (z.B. als Uretdion) und/oder mit externen Blockierungsmitteln blockiert. Die Reaktionsharzgemische sind bei Temperaturen zwischen 80 und 120°C im Direkt-Schmelz-Imprägnierverfahren anwendbar. Der Nachteil ist, dass die Aushärtetemperatur je nach System zwischen 120°C und 200°C liegt und die Aushärtezeit/Zykluszeit mit bis zu 60 Minuten sehr lang ist, was zu hohen Energie- und Herstellkosten führt. In den Beispielen wird mit einem Verlaufsadditiv gearbeitet, so dass davon auszugehen ist, dass die beschriebenen Systeme hohe Viskositäten besitzen.

Des Weiteren sind Prepregs auf der Basis von pulverförmigen Thermoplasten als Matrix bekannt. In US-A 20040231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inhärente Zähigkeit, ein gutes, viskoelastisches Dämpfungsverhalten, eine unbegrenzte Lagerfähigkeit, gute Chemikalienbeständigkeit und Recyclierbarkeit.

Composite-Bauteile mit einer Matrix auf der Basis von 2-Komponenten-Polyurethanen (2-K-PUR) sind ebenfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat ist, sind dies bei der zweiten Komponente Polyole bzw. Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstolf. 2-K-Systeme haben nach dem Vermischen beider Bestandteile eine begrenzte Verarbeitungszeit (Potlife), da die einsetzende, exotherme Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalyse, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepregs zu einem Composite zur Verfügung steht. Deshalb sind derartige Prepregs nicht über mehrere Stunden oder sogar Tage lagerstabil.

In JP-A 2004196851 werden Composite-Bauteile beschrieben, die aus Carbonfasern und organischen Fasern, wie z. B. Hanf, unter Verwendung einer Matrix aus 2-K-PUR auf der Basis von polymeren Methylendiphenyldiisocyanat (MDI) und speziellen OH-Gruppen haltigen Verbindungen hergestellt werden.

In WO 2003/101719 werden auf Polyurethan basierte Composite-Bauteile und Methoden zur Herstellung beschrieben. Es handelt sich um 2-K-Polyurethanharze mit definierten Viskositäten im Bereich von 300 bis 2000 mPas und bestimmten Gelzeiten von 3 bis 60 Minuten.

Bekannt sind auch physikalisch trocknende Systeme auf der Basis von nichtreaktiven PUR-Elastomeren. Es handelt sich hierbei um höhermolekulare, lineare, thermoplastische Polyurethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich. Bei der Herstellung von Prepregs mit Faserverbünden ist der Einsatz von Pulvern bei reaktiven Systemen eher unüblich und beschränkt sich bislang auf wenige Einsatzgebiete.

Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen. Dieses Verfahren wird in der EP-A 590702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht vollständig auseinander gezogen werden.

Diesbezüglich wird in US-A 20040231598 eine Methode vorgestellt, die ähnlich dem Wirbelbettverfahren funktioniert. Dabei transportiert ein Luftstrom die Partikel zum Substrat, und es erfolgt durch einen speziellen Aufbau eine gleichmäßige Abscheidung des Pulvers.

In DE-A 102009001793 und DE-A 102009001806 wird ein Verfahren zur Herstellung von lagerstabilen Prepregs, im Wesentlichen aufgebaut aus mindestens einem faserförmigen Träger und mindestens einer reaktiven pulverförmigen Polyurethanzusammensetzung als Matrixmaterial, beschrieben.

In WO 2012/022683 werden Faserverbundbauteile und ein Verfahren zu deren Herstellung beschrieben. Das Polyurethan, mit dem die Faserschicht getränkt ist, wird aus einem Reaktionsgemisch hergestellt. Das Reaktionsgemisch enthält neben Polyisocyanaten, Polyolen und gegebenenfalls Additiven als wesentlichen Bestandteil ein oder mehrere Polyepoxide. Das in dieser Anmeldung offenbarte Polyurethan hat den Nachteil einer für die Herstellung von Prepregs nicht ausreichenden Lagerstabilität, charakterisiert z.B. durch eine niedrige Glasübergangstemperatur. Darüber hinaus weist dieses System nicht den für eine Nachvernetzung zu fertigen Bauteilen erforderlichen NCO-Wert auf.

Die Aufgabe der vorliegenden Erfindung war es, ein Matrixmaterial zu finden, das eine sehr niedrige Viskosität besitzt, um eine gute Benetzung des faserförmigen Trägers zu gewährleisten, und das eine genügend lange Verarbeitungszeit zwischen dem Mischen der Komponenten und dem Imprägnieren der Verstärkungsfasern mit dem noch nicht ausreagierten Matrixmaterial aufweist. Eine weitere Aufgabe der Erfindung war es, Prepregs zur Verfügung zu stellen, die mittels eines einfachen Verfahrens hergestellt werden können, mehrere Wochen bei Raumtemperatur lagerstabil sind, niedrige Aushärtetemperaturen besitzen und schnell aushärten, um kurze Zykluszeiten zu erhalten. Darüber hinaus sollen die Prepregs nahezu klebfrei sein, um sie einfach weiter verarbeiten zu können.

Überraschend wurde gefunden, dass die Herstellung von lagerstabilen, aber dennoch reaktiven Prepregs durch Imprägnierung von Verstärkungsfasern mit einem sehr niedrigviskosen Polyurethansystem mit hoher Kennzahl gelingt, wobei diese Prepregs eine im Vergleich zu bereits existierenden Prepreg-Systemen extrem schnelle Aushärtezeit aufweisen. Die erfmdungsgemäßen Prepregs weisen verbesserte Verarbeitungseigenschaften und schnellere Zykluszeiten gegenüber den in DE-A 102010029355 (WO 2011/147688) beschriebenen Prepregs auf.

Gegenstand der Erfindung sind daher Prepregs enthaltend eine flächige Faserschicht, die mit nicht vollständig ausgehärtetem Polyurethan (Matrixmaterial) mit einem NCO- von 8 Gew.-% bis 16 Gew.-% und mit einem Tg-Wert von unter 40°C, bevorzugt von maximal 35°C (gemessen nach DIN EN ISO 53765-A-20) getränkt ist, wobei das Polyurethan erhältlich ist aus einem Reaktionsgemisch bestehend aus
A) einem oder mehreren Di- und/oder Polyisocyanaten aus der Gruppe bestehend aus aromatischen Di- und/oder Polyisocyanaten und deren polymere Homologen sowie Abmischungen daraus
   A) einer Polyolkomponente aus einem oder mehreren Polyolen mit einer mittleren OH-Zahl von 30 bis 1000 mg KOH/g, einer mittleren Funktionalität von 1,9 bis 2,5
   B) einem oder mehreren Dianhydrohexitolen
   C) einem oder mehreren latenten Katalysatoren, die bei Temperaturen von 50° bis 100°C katalytisch wirksam sind
   D) gegebenenfalls Hilfs- und/oder Zusatzstoffen, ausgenommen Polyepoxide
wobei das Reaktionsgemisch bei 40 °C eine anfängliche Viskosität von 30 bis 500 mPas (gemessen nach DIN EN ISO 53019), bevorzugt 70 bis 250 mPas, besonders bevorzugt 70 bis 150 mPas aufweist und das Verhältnis der Anzahl der NCO-Gruppen der Komponente A) zu der Anzahl der OH-Gruppen der Komponente B) bevorzugt von 1,35:1 bis 10:1, besonders bevorzugt von 1,4:1 bis 5,0:1 ist.

Der NCO-Wert des nicht vollständig ausgehärteten Polyurethans gibt den Gewichtsanteil an nicht reagierten Isocyanatgruppen im Polyurethan an. Der NCO-Wert wird über einen Zeitraum von mehreren Wochen bestimmt. Dieser NCO-Wert ist außerdem ein Indiz für die Lagerstabilität der Prepregs.

Der NCO-Wert der lagerstabilen Prepregs wird wöchentlich über einen Zeitraum von 7 Wochen bestimmt. Der NCO-Wert der erfindungsgemäßen Prepregs liegt in einem Bereich von 8 Gew.-% bis 16 Gew.-%, bevorzugt von 10 Gew.-% bis 16 Gew.-% und ganz besonders bevorzugt von 10 Gew.-% bis 14 Gew.-%. Der NCO-Wert der erfindungsgemäßen Prepregs ändert sich, auch ohne Zusatz von externen Blockierungsmitteln beziehungsweise sogenannten Stoppern, über einen Zeitraum von 7 Wochen kaum. Der NCO-Wert wird nach DIN EN ISO 14896:2009-07-Verfahren A bestimmt.

Bevorzugt sind Prepregs, bei denen die Faserschicht aus faserförmigem Material aus Glas, Kohlenstoff, Kunststoffen, Metallfasern, Naturfasern oder mineralischen Fasermaterialien wie Basaltfasern oder keramische Fasern oder Gemischen daraus besteht.

Ein weiterer Gegenstand der Erfindung sind flächige Faserverbundbauteile enthaltend mindestens ein erfindungsgemäßes Prepreg, wobei das oder die Prepregs vollständig ausgehärtet ist bzw. sind.

Ein weiterer Gegenstand der vorliegenden Erfindung ist ein Verfahren zur Herstellung der erfindungsgemäßen Prepregs, welches dadurch gekennzeichnet ist, dass
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen zwischen 10° und 80°C zur Herstellung einer Reaktivmischung vermischt wird,
iii) die Reaktivmischung aus ii) auf eine flächige Faserschicht aufgetragen wird und teilweise härtet.

Die Faserschicht wird also mit der Reaktivmischung imprägniert.

Ein weiterer Gegenstand der Erfindung ist ein Verfahren zur Herstellung der erfindungsgemäßen Faserverbundbauteile, welches dadurch gekennzeichnet ist, dass
ein oder mehrere erfindungsgemäß hergestellte Prepregs bei 110° bis 140°C und einem Druck von 1 bis 100 bar, bevorzugt von 1 bis 50 bar und besonders bevorzugt von 1 bis 10 bar oder unter Vakuum innerhalb von 1 bis 4 Minuten, bevorzugt von 1 bis 3 Minuten vollständig ausgehärtet werden.

Die Viskositäten werden nach DIN EN ISO 53019 (Platte/Platte) bestimmt.

Die erfindungsgemäßen Prepregs bzw. die daraus hergestellten Faserverbundbauteile können in unterschiedlichen Anwendungen im Bereich der Bau-, der Automobil- (z.B. Karosseriebauteile), der Luft- und Raumfahrt-Industrie (Flugzeugbau), des Strassenbaus (z.B. Kanaldeckel), der Energietechnik (Windkraftanlagen; z.B. Rotorblätter), im Boots- und Schiffbau und in hochbelasteten Strukturen eingesetzt werden.

Das Prinzip des Imprägnierverfahrens zur Herstellung der Prepregs besteht darin, dass zunächst eine reaktive Polyurethanzusammensetzung aus den einzelnen Komponenten A), B), C), D) und E) hergestellt wird. Die Komponenten B), C), D) und E) werden zuvor bei 40 bis 80 °C zu einer Polyolformulierung vermischt. Anschließend wird das homogene Gemisch bei Temperaturen unterhalb von 80 °C (vorzugsweise von 10° bis 75°C) mit der Komponente A) vermischt. Diese reaktive Polyurethanzusammensetzung wird dann direkt bei Raumtemperatur auf den faserförmigen Träger (flächige Faserschicht) aufgebracht, das heißt, es erfolgt eine Imprägnierung des faserförmigen Trägers mit dem hergestellten Polyurethansystem aus A), B), C), D) und E). Danach können die lagerfähigen Prepregs zu einem späteren Zeitpunkt zu Faserverbundbauteilen weiterverarbeitet werden. Durch das erfmdungsgemäße sehr niedrigviskose Polyurethansystem erfolgt eine sehr gute Imprägnierung des faserförmigen Trägers. Eine weitere Vernetzungsreaktion durch thermische Belastung der Polyurethanzusammensetzung wird durch das Arbeiten bei Raumtemperatur vermieden. Bei der Imprägnierung können unterschiedliche Varianten angewendet werden. Das Polyurethansystem kann z.B. in einem Walzenstuhl oder mittels eines Rakels aufgebracht werden.

Ein Vorteil der erfindungsgemäß eingesetzten Reaktionsmischungen ist das Vermischen der Komponente A) mit dem Gemisch aus B), C), D) und E) bei niedrigen Temperaturen von 10°C bis 80°C, bevorzugt von 20°C bis 60°C und besonders bevorzugt von 20°C bis 40°C, so dass ein Aufbau von Exothermie vermieden werden kann und das Reaktionsgemisch niedrigviskos bleibt und somit gut auf das Trägermaterial aufgebracht werden kann. Bei den bisherigen Systemen müssen die Komponenten bei Temperaturen zwischen 80°C und 120°C vermischt werden, was durch Anreagieren des reaktiven Matrixmaterials problematisch ist.

Die erfindungsgemäß eingesetzten Reaktionsmischungen benötigen im Gegensatz zu den in DE-A 102010029355 verwendeten Reaktionsmischungen weder externe Blockierungsmittel noch blockierte Isocyanatkomponenten. Mit den erfindungsgemäß eingesetzten Reaktionsmischungen ist ein schnelles Aushärten der Prepregs bei niedrigen Temperaturen und eine schnelle Fertigung der Faserverbundbauteile möglich.

Die erfindungsgemäß eingesetzte Reaktionsmischung kann auf Gießmaschinen mit Statikmischern oder mit dynamischen Mischern hergestellt werden, da nur eine kurze Mischzeit benötigt wird. Dies ist bei der Herstellung der erfmdungsgemäßen Faserverbundbauteile von großem Vorteil, da die Reaktivharzmischung für eine gute Tränkung möglichst dünnflüssig sein muss. Eine Mischung, die erst vorab für einige Minuten vermischt werden muss, zeigt durch die Bildung von Urethangruppen bereits eine zu hohe Viskosität.

Die erfindungsgemäß hergestellten Prepregs weisen nach Abkühlung auf Raumtemperatur eine sehr hohe Lagerstabilität von mehreren Wochen bei Raumtemperatur auf. Die so hergestellten Prepregs sind nahezu klebfrei und können daher einfach weiterverarbeitet werden.

Zur Bestimmung der Lagerstabilität der Prepregs wird der NCO-Wert über einen Zeitraum von mehreren Wochen bestimmt. Der NCO-Wert gibt den Gewichtsanteil an Isocyanatgruppen im Isocyanatgemisch, beziehungsweise im Prepolymer an.

Der NCO-Wert der lagerstabilen Prepregs wird wöchentlich über einen Zeitraum von 7 Wochen bestimmt. Der NCO-Wert der erfmdungsgemäßen Prepregs liegt zwischen 8 Gew.-% und 16 Gew.-%, bevorzugt zwischen 10 Gew.-% und 16 Gew.-% und ganz besonders bevorzugt zwischen 10 Gew.-% und 14 Gew.-%. Der NCO-Wert der erfmdungsgemäßen Prepregs liegt, auch ohne Zusatz von externen Blockierungsmitteln beziehungsweise sogenannten Stoppern, über einen Zeitraum von 7 Wochen in den angegebenen Grenzbereichen. Der NCO-Wert [in Gew.-%] wird nach DIN ISO EN DIN EN ISO 14896:2009-07-Verfahren A bestimmt.

In DE-A 102010029355 wird die Zugabe eines Verlaufsadditivs beschrieben, so dass davon auszugehen ist, dass die Reaktionsharzsysteme eine hohe Viskosität aufweisen. Die erfmdungsgemäßen Polyurethansysteme weisen sehr niedrige Viskositäten von 30 bis 500 mPas bei 40 °C auf, so dass eine Zugabe von Verlaufsadditiven nicht notwendig ist und trotzdem eine gute Tränkung der Fasern vorliegt.

Ein weiterer Vorteil der erfindungsgemäß eingesetzten Reaktionssysteme ist, dass beim Einsatz von aromatischen Polyisocyanaten Faserverbundbauteile mit hohen Glasübergangstemperaturen von über 130 °C erhalten werden und dass ein Aushärten bei niedrigen Temperaturen möglich ist.

Die Prepregs können in Form einer Schicht und in Form mehrerer über einander liegender Schichten zu einem Faserverbundbauteil verarbeitet werden. Vor der Vernetzung des Matrixmaterials werden die Prepregs vorzugsweise zugeschnitten, gegebenenfalls vernäht oder anderweitig fixiert und in einer geeigneten Form unter Druck, drucklos, gegebenenfalls unter Anlegen von Vakuum verpresst. Im Rahmen der vorliegenden Erfindung erfolgt dieser Vorgang der Herstellung der Faserverbundbauteile aus den Prepregs je nach Aushärtungszeit bei Temperaturen unterhalb von 140 °C, bevorzugt von 110° bis 140°C, besonders bevorzugt von 110° bis 135°C.

Während der Verarbeitung der Prepregs zu den Faserverbundbauteilen (z. B. durch Verpressen bei erhöhten Temperaturen) erfolgt durch Aufschmelzen des zunächst anreagierten Matrixmaterials zu einer niedrigviskosen Polyurethanzusammensetzung eine sehr gute Imprägnierung des faserförmigen Verstärkungsmaterials, bevor durch die vollständige Vernetzungsreaktion der Polyurethanzusammensetzung bei erhöhten Temperaturen die komplette Polyurethanmatrix durchhärtet. Vorzugsweise wird die Werkzeugkavität der Form vor dem Verpressen des Prepregs mit einem Trennmittel versehen. Es können weitere Schutz- oder Dekor-Schichten vor dem Einbringen des Fasermaterials zur Herstellung des Prepregs in das Werkzeug eingetragen werden, wie beispielsweise eine oder mehrere Gelcoatschichten.

Besonders bevorzugt ist ein Faserverbundbauteil, welches in der Faserschicht ein Polyurethan aufweist, das aus 50-80 Gew.-%, bevorzugt 65-75 Gew.-% Polyisocyanaten (A), 15-30 Gew.-%, bevorzugt 18-25 Gew.-% Polyolen (B), 5-15 Gew.-%, bevorzugt 8-12 Gew.-% Dianhydrohexitolen (C), 0,1-3 Gew.-%, bevorzugt 0,3-1,2 Gew.-% Katalysator (D) und 0-3 Gew.-%, bevorzugt 0,1-0,5 Gew.-% Additiven (E) erhältlich ist, wobei die Summe der Gewichtsanteile der Komponenten 100 Gew.-% ergibt.

Der Faseranteil im Faserverbundteil beträgt vorzugsweise mehr als 45 Gew.-%, besonders bevorzugt mehr als 50 Gew.-%, bezogen auf das Gesamtgewicht des Faserverbundbauteils.

Als Polyisocyanatkomponente A) kommen die üblichen aromatischen Di- und/oder Polyisocyanate zum Einsatz. Beispiele solcher geeigneten Polyisocyanate sind 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-% liegen. Die Viskosität des Isocyanates sollte vorzugsweise ≤ 250 mPas (bei 25°C), bevorzugt ≤ 100 mPas (bei 25°C) und besonders bevorzugt von ≤ 30 mPas (bei 25°C) sein.

Die OH-Zahl der Komponente B) gibt im Falle eines einzelnen zugesetzten Polyols dessen OH-Zahl an. Im Falle von Mischungen wird die OH-Zahl der Mischung angegeben. Dieser Wert kann anhand von DIN EN ISO 53240 bestimmt werden.

Die Polyolkomponente (Polyol oder Polyolgemisch) B) weist eine mittlere OH-Zahl von 30 bis 1000 mg KOH/g, bevorzugt von 50 bis 300 mg KOH/g und besonders bevorzugt von 60 bis 250 mg KOH/g auf. Bevorzugt hat die eingesetzte Polyolkomponente eine mittlere Funktionalität von 1,9 bis 2,5.

Erfindungsgemäß können als Polyolkomponente B) Polyetherpolyole, Polyesterpolyole oder Polycarbonatpolyole eingesetzt werden, bevorzugt sind Polyesterpolyole. Erfindungsgemäß verwendbare Polyesterpolyole sind beispielsweise Kondensationsprodukte von 1,4-Butandiol, Ethylenglycol und Adipinsäure.

Die Polyolkomponente B) kann auch Fasern, Füllstoffe und Polymere enthalten.

Dianhydrohexitole können beispielsweise durch zweifache Wasserabspaltung aus Hexitolen, wie z.B. Mannitol, Sorbitol und Iditol, hergestellt werden. Diese Dianhydrohexitole sind unter den Namen Isosorbid, Isomannid und Isoidid bekannt und haben folgende Formel:
Isosorbid, 1,4:3,6-dianhydro-D-glucitol: Isomannid, 1,4:3,6-dianhydro-D-mannitol: 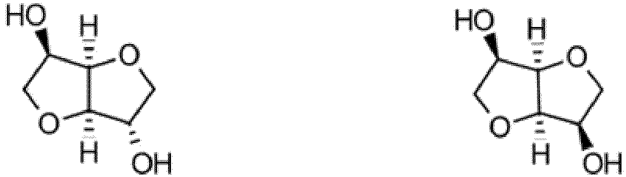
Isoidid, 1,4:3,6-dianhydro-L-iditol:

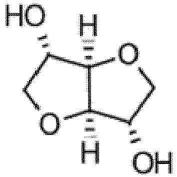

Besonders bevorzugt ist das Isosorbid. Isosorbid ist beispielsweise als Polysorb^{®} P von der Firma Roquette oder als Addolink^{®} 0312 von der Firma Rhein Chemie erhältlich. Es können auch Gemische aus den vorgenannten Verbindungen verwendet werden.

Als latente Katalysatoren D) werden bevorzugt Katalysatoren eingesetzt, die im Bereich zwischen 50°C und 100°C katalytisch aktiv sind. Typische latente Katalysatoren sind beispielsweise blockierte Amin- und Amidin-Katalysatoren der Hersteller Air Products (wie z.B. Polycat^{®} SA-1/10, Dabco KTM 60) und Tosoh Corporation (wie z.B. Toyocat^{®} DB 2, DB 30, DB 31, DB 40, DB 41, DB 42, DB 60, DB 70). Es können aber auch alle weiteren, typischen latenten Katalysatoren aus der Polyurethanchemie mit einer sogenannten Schalttemperatur von 50°C bis 100°C eingesetzt werden.

Gegebenenfalls können Hilfs- und/oder Zusatzstoffe (Additive) E) zugesetzt werden. Hierbei handelt es sich beispielsweise um Entlüfter, Entschäumer, Trennmittel, Füllstoffe, Fließhilfen, organische oder anorganische Farbstoffe, Treibmittel und Verstärkungsstoffe. Weitere bekannte Additive und Zusatzmittel können bei Bedarf verwendet werden. Polyepoxide werden nicht eingesetzt.

Als Fasermaterial können geschlichtete oder ungeschlichtete Fasern, beispielsweise Glasfasern, Kohlefasern, Metallfasern (z.B. Stahl- bzw. Eisenfasern), Naturfasern, Aramidfasern, Polyethylenfasern, Basaltfasern oder Carbon Nanotubes (CNTs) eingesetzt werden. Besonders bevorzugt sind Kohlefasern. Die Fasern können als Kurzfasern mit einer Länge von 0,1 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt sind Faser-Halbzeuge als Fasermaterial, wie beispielsweise Gewebe, Gelege, Geflechte, Matten, Vliese, Gestricke und Gewirke oder 3D-Faser-Halbzeuge.

Die erfmdungsgemäßen Faserverbundbauteile können beispielsweise zur Herstellung von Karosseriebauteilen von Automobilen oder im Flugzeugbau, Rotorblättern von Windkraftanlagen, zur Herstellung von Bauteilen des Gebäude- bzw. Straßenbaus (z.B. Kanaldeckel) und sonstigen hochbelasteten Strukturen verwendet werden.

Die Erfindung soll anhand der nachfolgenden Beispiele näher erläutert werden.

### Beispiele:

Es wurden lagerstabile Prepregs aus den erfindungsgemäßen Systemen aus Polyisocyanaten, Polyolen, Additiven und latenten Katalysatoren hergestellt und anschließend zu einem Faserverbundbauteil ausgehärtet und mit Prepregs/Verbundbauteilen aus Polyurethansystemen aus intern blockiertem Polyisocyanat und Polyol verglichen. Für die Herstellung des faserverstärkten Prepregs durch Imprägnieren wurde ein dünner Film des Polyurethansystems auf das Glasfasergewebe aufgetragen und auf der Oberfläche verteilt, so dass ein Glasfasergehalt von etwa 55 Gewichts-%, bezogen auf das spätere Bauteil, erreicht wurde. Anschließend wurden die Prepregs in einem Vakuumbeutel verpackt und bei Raumtemperatur gelagert. Die Prepregs wurden aus dem Beutel genommen und anschließend bei 130°C und 5 bar innerhalb von zwei Minuten zu einem Faserverbundbauteil verpresst. An den faserverstärkten Probenkörpern wurden die mechanischen Messungen vorgenommen. Der Glasfasergehalt wurde durch Veraschung der Probenkörper nach DIN EN ISO 1172 bestimmt. Die interlaminare Scherfestigkeit wurde nach DIN EN ISO 14130 bestimmt.

Das NCO/OH Verhältnis gibt das Verhältnis der Anzahl der NCO-Gruppen in der Polyisocyanatkomponente A) zu der Anzahl der OH-Gruppen in der Komponente B) und C) an.

### Verwendete Ausgangsverbindungen:

Komponente A): Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas)
Komponente B): linearer Polyesterpolyol aus Adipinsäure, Ethylenglycol und 1,4-Butandiol, Hydroxylzahl 86 mg KOH/g und Funktionalität 2, Viskosität bei 25°C: 250±50 mPas
Komponente C): Isosorbid (Addolink^{®} 0312 der Firma Rhein Chemie, Hydroxylzahl 768 mg KOH/g, Schmelzpunkt 60°C bis 63°C)
Komponente D): Toyocat^{®} DB 40: latenter Katalysator (blockiertes Amin) der Firma TOSOH Corporation
Komponente E): internes Trennmittel Edenor^{®} Ti 05 der Firma Cognis Deutschland, Säurezahl 200 mg KOH/g, Funktionalität 1
Glasfasergewebe: HPT 1040-E0/3AC11, 90°/0° der Firma SGL KÜMPERS GmbH & Co. KG, Flächengewicht 1036 g/m²

### Verwendete Messgeräte und Normen:

DSC: Messgerät DSC Q 20 V24.8 Build 120 der Fa. Texas Instruments
Viskosimeter: MCR 501 der Fa. Anton Paar
DIN EN ISO 53019 (d/dt = 60 1/s): d/dt = Scherrate
DIN EN ISO 53765-A-20: A-20 = Bestimmung des Glasübergangspunktes mit einer Temperaturänderung von 20 Kelvin/Sekunde
DIN EN ISO 14896:2009-07-Verfahren A: Verfahren A = NCO-Wertbestimmung mittels Titration

### Beispiel 1:

21,3 g Komponente C) wurden mit 42,5 g Komponente B), 1,5 g Toyocat^{®} DB 40 und 0,66 g der Komponente E) bei 70 °C vermischt. Anschließend wurden 137,5 g Desmodur^{®} VP.PU 60RE11 bei Raumtemperatur zugegeben und mit einem Speedmixer homogenisiert. Danach wurde ein dünner Film dieses Gemisches auf ein Glasfasergewebe aufgetragen und auf der Oberfläche verteilt. Der NCO-Wert des Prepregs lag nach 24 Stunden bei 14,8 %. Das Prepreg wurde anschließend bei 130 °C und 5 bar zu einem Faserverbundbauteil verpresst.

### Vergleichsbeispiel 2:

10,4 g Komponente C) wurden mit 20,9 g Komponente B), 0,75 g Toyocat^{®} DB 40, 0,33 g der Komponente E) und 106,8 g Eurepox^{®} 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) bei 70 °C vermischt. Anschließend wurden 67,6 g Desmodur^{®} VP.PU 60RE11 bei Raumtemperatur zugegeben und mit einem Speedmixer homogenisiert. Direkt nach dem Vermischen stieg die Viskosität auf ca. 5000 mPas an und machte somit das Auftragen eines dünnen Films dieses Gemisches auf das Glasfasergewebe unmöglich. Der NCO-Wert der Matrix lag nach 60 Minuten bei 4,9%.

**Tabelle 1:**

| Beispiele | Beispiel 1 | Vergleichs-Beispiel 2 | * |
|---|---|---|---|
| NCO/OH Äquivalentverhältnis | 2,95:1 | 1,1:1 | 1:1 |
| NCO/Epoxid Äquivalentverhältnis | - | 1,1:1 | - |
| Viskosität bei 40 °C (direkt nach dem Vermischen) [mPas]; gemessen nach DIN EN ISO 53019 (d/dt = 60 1/s) | ca. 10 mPas | ca. 5000 | keine homogene Schmelze, da Schmelzpunkt von Fineplus^{®} PE 8078 >60°C |
| Lagerfähigkeit des Prepregs [nach Tagen]; gemessen anhand der Glasübergangstemperatur Tg [°C] nach DIN EN ISO 53765-A-20 | nach 7 Tagen: -21 | nach 1 Tag: 49 | nach 2 Tagen: 50 |
| | nach 14 Tagen: - 19 | | nach 17 Tagen: 55 |
| | nach 21 Tagen -9 | | nach 30 Tagen: 56 |
| | nach 49 Tagen: 0 | | |
| | | | nach 47 Tagen: 55 |
| NCO-Wert des Prepregs [nach Tagen]; gemessen nach DIN EN ISO 14896:2009-07-Verfahren A [Gew.-%] | Nach 1 Tag: 14,8 | Nach 1 Tag: | |
| | | | |
| | Nach 7 Tagen: 13,2 | 4,4 | |
| | Nach 14 Tagen: 12,9 | | |
| | Nach 21 Tagen: 12,8 | | |
| | Nach 35 Tagen: 12,1 | | |
| | Nach 42 Tagen: 11,9 | | |
| | Nach 49 Tagen: 11,7 | | |
| Glasübergangstemperatur der ausgehärteten Matrix (T_{g}) [°C] (ohne Glasfaser) nach DIN EN ISO 53765-A-20 | ca. 146 | ca. 60 | |
| Verfestigungszeit | 2 min bei 130 °C | 30 sek bei Raumtemperatur | 30 min; die Temperatur wird in dieser Zeit von 90°C auf 170 °C angehoben |
| Glasfasergehalt [Gew.-%] nach DIN EN ISO 1172 | 55 | - | >50 |
| Interlaminare Scherfestigkeit 0°-Richtung (ShortBeam) [N/mm²] nach DIN EN ISO 3597-4 | 52 | - | 41 |

| | | | |
|---|---|---|---|
| *Vergleichsdaten aus DE-A 102010029355 | | | |

Die Lagerstabilität des Prepregs wurde sowohl anhand der Glasübergangstemperatur (T_{g}) mittels DSC-Untersuchungen bestimmt, als auch anhand des NCO-Wertes [in Gew.-%]. Aus den Werten aus der Tabelle geht hervor, dass die Vernetzungsfähigkeit des erfindungsgemäßen Prepregs durch die Lagerung bei Raumtemperatur über einen Zeitraum von 7 Wochen nicht beeinträchtigt wurde.

Die Verfestigungszeit ist die Zeit, bei der die Vernetzung der Polyurethanzusammensetzung vollständig ist, so dass keine Reaktionsenthalpie für die Vernetzungsreaktion mehr detektierbar ist.

Im Vergleichsbeispiel 2_wurde zum erfindungsgemäßen System aus Beispiel 1 eine entsprechende Menge Eurepox^{®} 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) hinzugegeben, so dass ein Äquivalentverhältnis von NCO-Gruppen zu Epoxidgruppen von 1,1:1 entstand. Direkt nach dem Vermischen und homogenisieren stieg die Viskosität des Reaktionsgemisches auf ca. 5000 mPas an. Nach 30 Sekunden lag die Matrix nahezu fest vor. Die hohe Anfangsviskosität machte das Tränken der Fasern unmöglich. Die Glasübergangstemperatur lag bereits nach 24 Stunden bei 49 °C und der NCO-Wert bei unter 4,4 Gew.-%. Daher war das Herstellen von Prepregs in Anwesenheit von Epoxiden nicht möglich.

## Patentansprüche

1. Prepregs enthaltend eine flächige Faserschicht, die mit nicht vollständig ausgehärtetem Polyurethan (Matrixmaterial) mit einem NCO-Wert von 8 Gew.-% bis 16 Gew.-% und mit einem Tg-Wert von unter 40°C (gemessen nach DIN EN ISO 53765-A-20) getränkt ist, wobei das Polyurethan erhältlich ist aus einem Reaktionsgemisch bestehend aus
A) einem oder mehreren Di- und/oder Polyisocyanaten aus der Gruppe bestehend aus aromatischen Di- und/oder Polyisocyanaten und deren polymere Homologen sowie Abmischungen daraus
B) einer Polyolkomponente aus einem oder mehreren Polyolen mit einer mittleren OH-Zahl von 30 bis 1000 mg KOH/g (gemessen nach DIN EN ISO 53240), einer mittleren Funktionalität von 1,9 bis 2,5
C) einem oder mehreren Dianhydrohexitolen
D) einem oder mehreren latenten Katalysatoren, die bei Temperaturen von 50°C bis 100°C katalytisch aktiv sind
E) gegebenenfalls Hilfs- und/oder Zusatzstoffen, ausgenommen Polyepoxide
wobei das Reaktionsgemisch bei 40 °C eine Anfangsviskosität von 30 bis 500 mPas (gemessen nach DIN EN ISO 53019) aufweist und das Verhältnis der Anzahl der NCO-Gruppen der Komponente A) zu der Anzahl der OH-Gruppen der Komponente B) von 1,35:1 bis 10:1 ist.

2. Prepregs gemäß Anspruch 1, **dadurch gekennzeichnet, dass** die Komponente C) in Mengen von 5-15 Gew.-%, bezogen auf die Komponenten A) bis E), vorliegt.

3. Prepregs gemäß Anspruch 1 oder 2, **dadurch gekennzeichnet, dass** die Faserschicht aus faserförmigem Material aus Glas, Kohlenstoff, Kunststoffen, Metallfasern, Naturfasern oder mineralischen Fasermaterialien wie Basaltfasern oder keramische Fasern oder Gemischen daraus besteht.

4. Flächige Faserverbundbauteile enthaltend mindestens ein Prepreg gemäß einem oder mehreren der Ansprüche 1 bis 3, wobei das Prepreg vollständig ausgehärtet ist.

5. Verfahren zur Herstellung von Prepregs gemäß einem oder mehreren der Ansprüche 1 bis 3, **dadurch gekennzeichnet, dass**
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen zwischen 10° und 80°C zur Herstellung einer Reaktivmischung vermischt wird,
iii) die Reaktivmischung aus ii) auf eine flächige Faserschicht aufgetragen wird und teilweise härtet.

6. Verfahren zur Herstellung von Faserverbundbauteilen gemäß Anspruch 4, **dadurch gekennzeichnet, dass**
ein oder mehrere nach dem Verfahren gemäß Anspruch 5 hergestellten Prepregs bei 110° bis 140°C und einem Druck von 1 bis 100 bar oder unter Vakuum innerhalb von 1 bis 4 Minuten vollständig ausgehärtet werden.

7. Verwendung der Prepregs gemäß einem oder mehreren der Ansprüche 1 bis 3 oder der flächigen Faserverbundbauteile gemäß Anspruch 4 zur Herstellung von Karosseriebauteilen von Automobilen oder im Flugzeugbau, in Bauteilen des Gebäude- bzw. Straßenbaus (z.B. Kanaldeckel), zur Herstellung von Rotorblättern von Windkraftanlagen und hochbelasteten Strukturen.

## Claims

1. Prepregs comprising a sheet-like fiber layer saturated with polyurethane (matrix material) that has not been fully hardened and that has an NCO value of from 8% by weight to 16% by weight, and that has a Tg-value below 40°C (measured in accordance with DIN EN ISO 53765-A-20), where the polyurethane is obtainable from a reaction mixture composed of
A) one or more di- and/or polyisocyanates from the group consisting of aromatic di- and/or polyisocyanates and polymeric homologs of these, and also blends thereof
B) a polyol component made of one or more polyols with an average OH number of from 30 to 1000 mg KOH/g (measured in accordance with DIN EN ISO 53240), with an average functionality of from 1.9 to 2.5
C) one or more dianhydrohexitols
D) one or more latent catalysts which are catalytically active at temperatures of from 50°C to 100°C
E) optionally auxiliaries and/or additives, other than polyepoxides
where the initial viscosity of the reaction mixture at 40°C is from 30 to 500 mPas (measured in accordance with DIN EN ISO 53019), and the ratio of the number of the NCO groups in component A) to the number of the OH groups in component B) is from 1.35:1 to 10:1.

2. Prepregs according to Claim 1, **characterized in that** amounts present of component C) are from 5 to 15% by weight, based on components A) to E).

3. Prepregs according to Claim 1 or 2, **characterized in that** the fiber layer is composed of fibrous material made of glass, carbon, synthetic polymers, metal fibers, natural fibers, or mineral fiber materials, such as basalt fibers, or ceramic fibers, or a mixture thereof.

4. Sheet-like fiber-composite components comprising at least one prepreg according to one or more of Claims 1 to 3, where the prepreg has been fully hardened.

5. Process for the production of prepregs according to one or more of Claims 1 to 3, **characterized in that**
i) components B) to E) are mixed at temperatures from 40° to 80°C, preferably from 50° to 70°C, to produce a polyol formulation X,
ii) the polyol formulation X from step i) is mixed with component A) at temperatures from 10° to 80°C to produce a reactive mixture,
iii) the reactive mixture from ii) is applied to a sheet-like fiber layer and to some extent cured.

6. Process for the production of fiber-composite components according to Claim 4, **characterized in that** one or more prepregs produced by the process according to Claim 5 is/are fully hardened at from 110° to 140°C and at a pressure of from 1 to 100 bar or in vacuo within from 1 to 4 minutes.

7. Use of the prepregs according to one or more of Claims 1 to 3 or of the sheet-like fiber-composite components according to Claim 4 for the production of bodywork components of automobiles or in aircraft construction, in components for the construction of buildings or of roads (e.g. manhole covers), for the production of rotor blades of wind turbines, and of structures exposed to high loads.

## Revendications

1. Pré-imprégnés contenant une couche fibreuse bidimensionnelle, qui est imprégnée d'un polyuréthanne non entièrement durci (matériau de matrice) ayant un indice NCO de 8 % en poids à 16 % en poids et ayant une valeur de T_{g} inférieure à 40°C (mesurée selon DIN EN ISO 53765-A-20), le polyuréthanne pouvant être obtenu à partir d'un mélange réactionnel consistant en
A) un ou plusieurs di- et/ou polyisocyanates du groupe consistant en les di- et/ou les polyisocyanates aromatiques et leurs homologues polymères, ainsi que les mélanges de ceux-ci,
B) un composant polyol constitué d'un ou plusieurs polyols ayant un indice d'OH moyen de 30 à 1000 mg KOH/g (mesuré selon DIN EN ISO 53240), ayant une fonctionnalité moyenne de 1,9 à 2,5,
C) un ou plusieurs dianhydrohexitols,
D) un ou plusieurs catalyseurs latents, qui sont catalytiquement actifs à des températures de 50 à 100°C,
E) éventuellement, des adjuvants et/ou additifs, à l'exception de polyépoxydes,
le mélange réactionnel présentant à 40°C une viscosité initiale de 30 à 500 mPa.s (mesurée selon DIN EN ISO 53019), et le rapport du nombre des groupes NCO du composant A) au nombre des groupes OH du composant B) étant de 1,35:1 à 10:1.

2. Pré-imprégnés selon la revendication 1, **caractérisés en ce que** le composant C) est présent en des quantités de 5 à 15 % en poids, par rapport aux composants A) à E).

3. Pré-imprégnés selon la revendication 1 ou 2, **caractérisés en ce que** la couche fibreuse est constituée d'un matériau fibreux de verre, de carbone, de plastiques, de fibres métalliques, de fibres naturelles et de matériaux fibreux minéraux tels que les fibres de basalte, ou de fibres céramiques ou de mélanges de ceux-ci.

4. Composants composites bidimensionnels renforcés par des fibres, contenant au moins un pré-imprégné selon l'une ou plusieurs des revendications 1 à 3, le pré-imprégné étant entièrement durci.

5. Procédé de fabrication de pré-imprégnés selon l'une ou plusieurs des revendications 1 à 3, **caractérisé en ce que**
i) pour fabriquer une formulation de polyols X, on mélange les composants B) à E) à des températures de 40 à 80°C, de préférence de 50 à 70°C,
ii) pour fabriquer un mélange réactionnel, on mélange la formulation de polyols X de l'étape i) au composant A) à des températures comprises entre 10 et 80°C,
iii) on applique le mélange réactionnel de ii) sur une couche fibreuse bidimensionnelle, et on le soumet à un durcissement partiel.

6. Procédé de fabrication de composants composites renforcés par des fibres selon la revendication 4, **caractérisé en ce qu'**on durcit complètement un ou plusieurs pré-imprégnés fabriqués par le procédé selon la revendication 5, à 110 à 140°C et sous une pression de 1 à 100 bar, ou sous vide, en 1 à 4 minutes.

7. Utilisation de pré-imprégnés selon l'une ou plusieurs des revendications 1 à 3 ou des composants composites bidimensionnels renforcés par des fibres selon la revendication 4 pour fabriquer des éléments de carrosserie d'automobile ou dans la construction aéronautique, dans les composants de la construction des bâtiments ou de la construction routière (p.ex. les plaques d'égouts), pour fabriquer des pales de rotor d'éoliennes et des structures soumises à de fortes sollicitations.
